# EUROPEAN PATENT APPLICATION

(11) **EP 3 915 804 A1**
(43) Date of publication of application: **01.12.2021**
(21) Application number: 20843440.7
(22) Date of filing: 09.01.2020
(51) Int. Cl.: B60B 3/04, B23K 33/00

(54) **VEHICLE WHEEL**

(30) Priority: 23.07.2019 CN 201910667209
(71) Applicant: Zhejiang Jingu Co., Ltd., Hangzhou, Zhejiang 311400 (CN)
(72) Inventor: YE, Yanfei, Hangzhou, Zhejiang 311400 (CN); SHENG, Feng, Hangzhou, Zhejiang 311400 (CN); WU, Binghua, Hangzhou, Zhejiang 311400 (CN); WANG, Lufen, Hangzhou, Zhejiang 311400 (CN)
(74) Representative: Inchingalo, Simona
(86) International application number: PCT/CN2020/071209
(87) International publication number: WO 2021/012642

(57) **Abstract**

The invention provides a wheel. The wheel includes: a rim (10), a surface of an axial end of the rim (10) forming a first connecting surface (11); a spoke (20), a part of a surface of an axial end of the spoke (20) forming a second connecting surface (21), wherein the spoke (20) is laser welded with the first connecting surface (11) by the second connecting surface (21); and a welding bead structure (100) for fixedly connecting the rim (10) and the spoke (20) is formed at a contact position between the first connecting surface (11) and the second connecting surface (21), and the welding bead structure (100) is formed by a part of the rim (10) and a part of the spoke (20) being melted and then connected.

## Description

### Technical Field

The present invention relates to the technical field of vehicles, and in particular, relates to structural improvement of a wheel. The present invention claims priority to a patent application with application no. 201910667209.6, entitled "Wheel", and filed to the China National Intellectual Property Administration on July 23, 2019.

### Background

In an art known to inventors, conventional welding methods, such as gas shielded welding and submerged arc welding are generally used to fix a rim and a spoke. The conventional welding methods have a large range of heat affected zone, thereby reducing the strength of the wheel itself, causing the structural stability of the wheel to be poor; furthermore, a welding bead structure on a wheel manufactured and formed by welding methods known to inventors has an unreasonable structure, and as the height of the welding bead structure is too high, the installation of a tire will be affected, causing air leakage, and safety accidents are likely to occur. In the art known to inventors, a procedure of lathe machining is generally increased, and a too high portion of the welding bead structure is lathed away, which increases the complexity of a wheel manufacturing process; in addition, when a radial load test is performed on the wheel, a crack tends to occur at end portions of the welding bead structure, which further indicates that the structure of a wheel machined and manufactured by the welding methods is unstable, which cannot meet use requirements that the wheel has a relatively long service life.

### Summary

Some embodiments of the present invention provide a vehicle wheel, so as to solve the problems in the art known to inventors that a welding bead structure formed when a rim and a spoke are welded by conventional welding methods is unreasonable, thereby causing the structural stability of the wheel to be poor, which cannot meet the welding strength requirements of the rim and the spoke, and thereby causing the rim and the spoke to have a poor connection stability, which affects the use safety and the service life of the wheel.

Some embodiments of the present invention provide a wheel, the wheel includes: a rim, a surface of an axial end of the rim forming a first connecting surface; and a spoke, a part of a surface of an axial end of the spoke forming a second connecting surface, wherein the spoke is laser welded with the first connecting surface by the second connecting surface, a welding bead structure for fixedly connecting the rim and the spoke is formed at a contact position between the first connecting surface and the second connecting surface, and the welding bead structure is formed by a part of the rim and a part of the spoke being melted and then connected.

In some embodiments of the present invention, the rim includes a rim body and a bending flange which are connected to each other, wherein an end face of the bending flange facing towards a side of the spoke forms the first connecting surface, the first connecting surface is surface-fitted with the second connecting surface, and the welding bead structure is located in a region covered by the first connecting surface and the second connecting surface.

In some embodiments of the present invention, the rim includes a rim body and a bending flange which are connected to each other, wherein an end face of the bending flange facing towards a side of the spoke forms the first connecting surface, the first connecting surface is surface-fitted with the second connecting surface, and a width of the welding bead structure in a radial direction of the rim is greater than or equal to a width of the first connecting surface in the radial direction of the rim.

In some embodiments of the present invention, there is one bending flange, the bending flange continuously extends around a circumferential direction of the rim body, and the second connecting surface is in an annular shape adapted to the bending flange.

In some embodiments of the present invention, a part of the spoke protrudes towards the rim to form an annular protrusion, and the bending flange is adaptively fitted with the annular protrusion.

In some embodiments of the present invention, there are a plurality of bending flanges, the plurality of bending flanges are arranged at intervals around a circumferential direction of the rim body, the second connecting surface includes a plurality of segments of sub-connecting surfaces arranged at intervals around a circumferential direction of the spoke, and the plurality of bending flanges cooperate with the plurality of segments of sub-connecting surfaces in one to one correspondence.

In some embodiments of the present invention, a part of the spoke is provided to protrude towards the rim, so as to form a plurality of protrusion structures, and the plurality of bending flanges are adaptively fitted with the plurality of protrusion structures in one to one correspondence.

In some embodiments of the present invention, an extension path of the welding bead structure is the same as a circumferential extension path of the bending flanges, and a length of the welding bead structure is equal to a length of the bending flanges.

In some embodiments of the present invention, the bending flange is perpendicular to the rim body.

In some embodiments of the present invention, the first connecting surface and the second connecting surface are both planar surfaces.

When using the technical solutions of some embodiments of the present invention, the rim is fixedly connected with the spoke by laser welding, the heat affected zone of the laser welding is relatively small, and the cooperation between the first connecting surface of the rim and the second connecting surface of the spoke ensures that the rim and the spoke have a sufficient contact area; thus, the laser welding facilitates improving the connection strength at the welding position of the rim and the spoke, and facilitates improving the structural strength of the wheel, thereby ensuring that the wheel has good use safety and a long service life. Furthermore, the welding bead structure, formed at the welding position between the rim and the spoke, is formed jointly by a part of the rim and a part of the spoke. Such a welding bead structure is not only tiny but also stable, this is because the laser welding is efficient and precise, and damage to both the rim and the spoke is small; furthermore, the welding beam structure, formed by a part of the spoke and a part of the rim being melted and then connected, has a regular overall structure, and the strength of the welding bead structure is greatly improved, so that the wheel is not easy to break when being impacted by an external force, thereby greatly improving the connection stability between the rim and the spoke.

Not only that, the laser welding is used for welding a high-strength material, and the laser welding has characteristics of short welding time and low welding energy consumption, thereby facilitating improving the production efficiency of a wheel and reducing the production costs of the wheel of a vehicle. In addition, the laser welding has small smoke, thereby providing a better working environment for an operator and protecting the environment.

### Brief Description of the Drawings

The drawings of the description, constituting a part of some embodiments of the present invention, are used for providing further understanding of some embodiments of the present invention, and the illustrative embodiments of the present invention and illustrations thereof are used to explain some embodiments of the present invention, rather than constitute inappropriate limitation on some embodiments of the present invention. In the drawings:
Fig. 1 shows a schematic front section view of a rim and a spoke, in an unwelded state, of a wheel according to Embodiment I of the present invention;
Fig. 2 shows a schematic enlarged view of A in fig. 1;
Fig. 3 shows a schematic front section view of the rim and the spoke, after being welded, of the wheel in fig. 1;
Fig. 4 shows a schematic enlarged view of B in fig. 3;
Fig. 5 shows a schematic front section view of a rim and a spoke, in an unwelded state, of a wheel according to Embodiment II of the present application;
Fig. 6 shows a schematic enlarged view of C in fig. 5;
Fig. 7 shows a schematic front section view of the rim and the spoke, after being welded, of the wheel in fig. 5; and
Fig. 8 shows a schematic enlarged view of D in fig. 7.

The figures above comprise the following reference signs:
10, rim; 11, first connecting surface; 12, rim body; 13, bending flange; 20, spoke; 21, second connecting surface; 22, annular protrusion; 100, welding bead structure.

### Detailed Description of the Embodiments

Hereinafter, the technical solutions in the embodiments of the present invention will be described clearly and thoroughly with reference to the accompanying drawings of the embodiments of the present invention. Obviously, the embodiments as described are only some of the embodiments of the present invention, and are not all of the embodiments of the present invention. The following description of at least one exemplary embodiment is merely illustrative in nature and is in no way intended to limit some embodiments of the present invention and any applications or uses thereof. All other embodiments obtained by a person of ordinary skill in the art based on the embodiments of the present invention without any inventive effort shall all fall within the scope of protection of some embodiments of the present invention.

In order to solve the problems in the art that a welding bead structure formed when a rim and a spoke are welded by conventional welding methods is unreasonable, thereby causing the structural stability of the wheel to be poor, which cannot meet the welding strength requirements of the rim and the spoke, and thereby causing the rim and the spoke to have a poor connection stability, which affects the use safety and the service life of the wheel, some embodiments of the present invention provide a wheel.

### Embodiment I

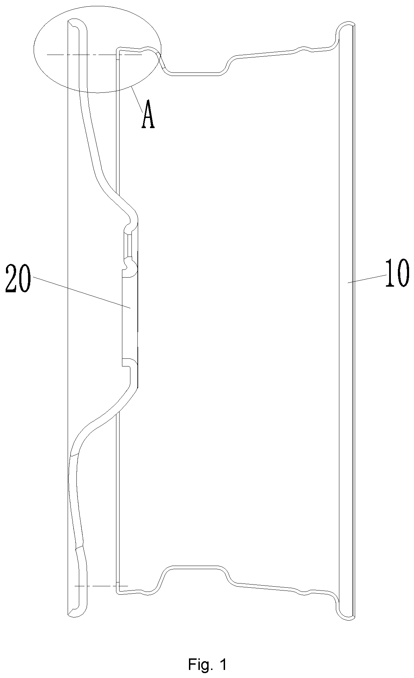

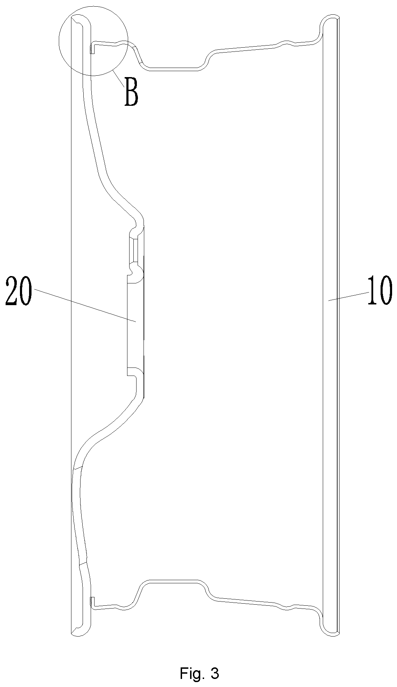

As shown in fig. 1 to fig. 4, a wheel includes a rim 10 and a spoke 20, wherein a surface of an axial end of the rim 10 forms a first connecting surface 11, a part of a surface of an axial end of the spoke 20 forms a second connecting surface 21, the spoke 20 is laser welded with the first connecting surface 11 by the second connecting surface 21, a welding bead structure 100 for fixedly connecting the rim 10 and the spoke 20 is formed at a contact position of the first connecting surface 11 and the second connecting surface 21, and the welding bead structure 100 is formed by a part of the rim 10 and a part of the spoke 20 being melted and then connected.

The rim 10 is fixedly connected to the spoke 20 by laser welding, the heat affected zone of the laser welding is relatively small, and the cooperation between the first connecting surface 11 of the rim 10 and the second connecting surface 21 of the spoke 20 ensures that the rim 10 and the spoke 20 have a sufficient contact area; thus, the laser welding facilitates improving the connection strength at a welding position of the rim 10 and the spoke 20, and facilitates improving the structural strength of the wheel, thereby ensuring that the wheel has good use safety and a long service life. Furthermore, the welding bead structure 100 formed at the welding position between the rim 10 and the spoke 20 is formed jointly by a part of the rim 10 and a part of the spoke 20. Such a welding bead structure 100 is not only tiny but also stable, this is because the laser welding is efficient and precise, and damage to both the rim and the spoke is small; furthermore, the welding beam structure 100 formed by a part of the spoke 20 and a part of the rim 10 being melted and then connected has a regular overall structure, and the strength of the welding bead structure 100 is greatly improved, so that the wheel is not easy to break when being impacted by an external force, thereby greatly improving the connection stability between the rim 10 and the spoke 20.

Not only that, the laser welding can be used for welding a high-strength material, and the laser welding has characteristics of short welding time and low welding energy consumption, thereby facilitating improving the production efficiency of a wheel and reducing the production costs of the wheel. In addition, the laser welding has small smoke, thereby providing a better working environment for an operator and protecting the environment.

It should be noted that in the assembly positional relationship between the rim 10 and the spoke 20 of the wheel provided in some embodiments of the present invention, the aesthetic appearance of the wheel is greatly improved, i.e., as a full-surface wheel, the area of the spokes 20 will be greater than the area of a region enclosed by the rim 10, so as to achieve the effect that the spokes 20 covers the rim 10. When a user views the entire wheel along an axial direction from one side of the spoke 20, the rim 10 will not be seen, and therefore, the aesthetic appearance of a vehicle using the wheel provided by some embodiments of the present invention is also improved.

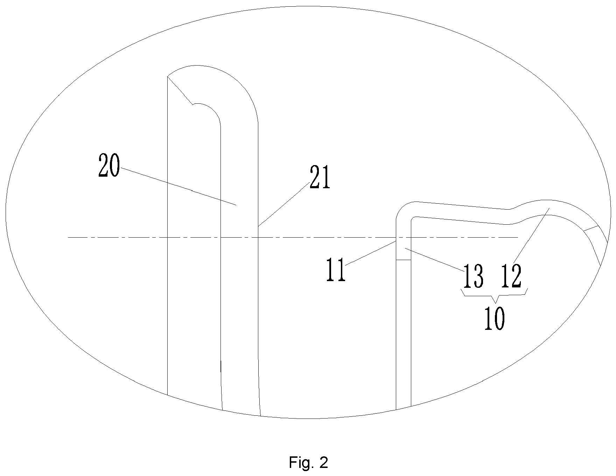

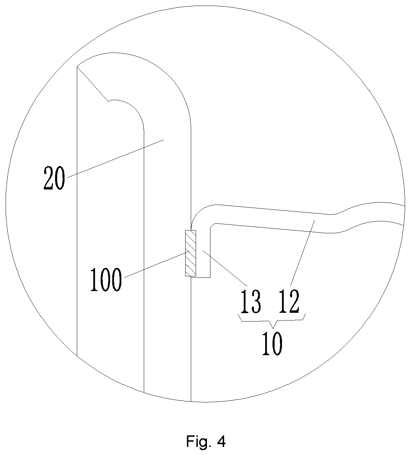

As shown in fig. 2 and fig. 4, the rim 10 includes a rim body 12 and a bending flange 13 which are connected, wherein an end face of the bending flange 13 facing towards a side of the spoke 20 forms the first connecting surface 11, the first connecting surface 11 is surface fitted with the second connecting surface 21, and the welding bead structure 100 is located in a region covered by the first connecting surface 11 and the second connecting surface 21. The welding bead structure 100 in such a position ensures that the rim 10 and the spoke 20 have sufficient connection strength, so that the wheel can bear sufficient enough impact loads in a later period, ensuring normal use of the wheel, and improving the practicability of the wheel. Furthermore, in terms of the appearance of the wheel, there is no apparent irregular structure at the connection position between the rim 10 and the spoke 20, and therefore the aesthetic appearance of the wheel is greatly improved, the appearance regularity of wheels produced in batches is ensured, and the use satisfaction of the user is improved. In addition, the surface-fitting between the first connecting surface 11 and the second connecting surface 21 ensures that the rim 10 and the spoke 20 are sufficiently in contact with each other, and ensure that the rim and the spoke have a sufficient contact area. When the wheel is impacted, the wheel is prevented from being damaged due to stress concentration on the contact surface between the rim 10 and the spoke 20, further improving the use stability of the wheel.

Of course, in an alternative embodiment not shown in figures in some embodiments of the present invention, the rim 10 includes a rim body 12 and a bending flange 13 which are connected, wherein an end face of the bending flange 13 facing towards one side of the spoke 20 forms the first connecting surface 11, the first connecting surface 11 and the second connecting surface 21 are surface bonded. A width of the welding bead structure 100 in the radial direction of the rim 10 is greater than or equal to a width of the first connecting surface 11 in the radial direction of the rim 10. The welding bead structure 100 in this form and position then allows the region of the contact surface between the rim 10 and the spoke 20 to be sufficiently laser welded, so that the welding bead structure 100 occupies a larger region, thereby greatly improving the connection stability between the rim 10 and the spoke 20, such that when the wheel, as a regular whole, is facing the load impact of various strengths, the rim 10 and the spoke 20 always do not break at the position of the welding bead structure 100.

In an alternative embodiment provided in some embodiments of the present invention, there is one bending flange 13, the bending flange 13 continuously extends around a circumferential direction of the rim body 12, and the second connecting surface 21 is in an annular shape adapted to the bending flange 13. The rim 10 having such a structure form can ensure a sufficient contact area with the spoke 20, ensure that the rim 10 is supported by the spokes at various positions in the circumferential direction, and improve the overall stability of the wheel structure.

Of course, in an alternative embodiment not shown in figures of some embodiments of the present invention, on the premise that a sufficient connection strength between the rim 10 and the spoke 20 is ensured, the machining and manufacturing consumables of the rim 10 are reduced as much as possible, so as to achieve the objects of reducing the machining and manufacturing costs of the wheel and reducing the entire weight of the wheel. There are a plurality of bending flanges 13, the plurality of bending flanges 13 are arranged at intervals around a circumferential direction of the rim body 12, the second connecting surface 21 includes a plurality of segments of sub-connecting surfaces arranged at intervals around a circumferential direction of the spoke 20, and the plurality of bending flanges 13 cooperate with the plurality of segments of sub-connecting surfaces in one to one correspondence.

In some embodiments of the present invention, the bending flange 13 is perpendicular to the rim body 12. The rim 10 of such a structural form not only facilitates the machining and manufacturing, but also facilitates improving the fitting effect between the second connecting surface 21 of the spoke 20 and the first connecting surface 11 of the rim 10.

Similarly, in consideration of the surface-fitting effect of the rim 10 and the spoke 20, and facilitating the machining and manufacturing of the rim 10 and the spoke 20,in some embodiments, both the first connecting surface 11 and the second connecting surface 21 are planar surfaces.

In some embodiments, an extension path of the welding bead structure 100 is the same as a circumferential extension path of the bending flange 13, and the length of the welding bead structure 100 is equal to the length of the bending flange 13. In this way, the welding stability between the rim 10 and the spoke 20 is further improved.

### Embodiment II

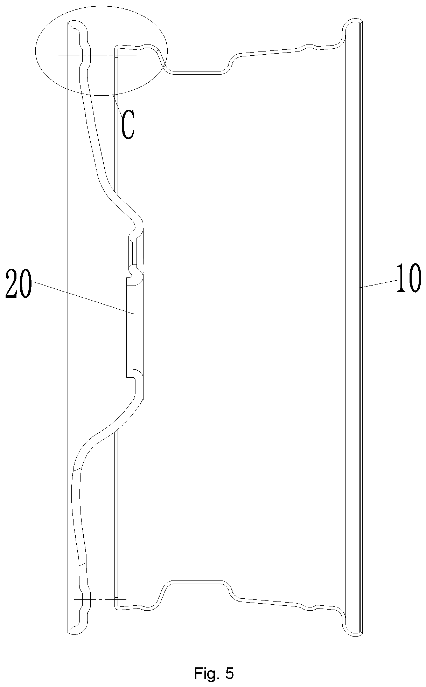

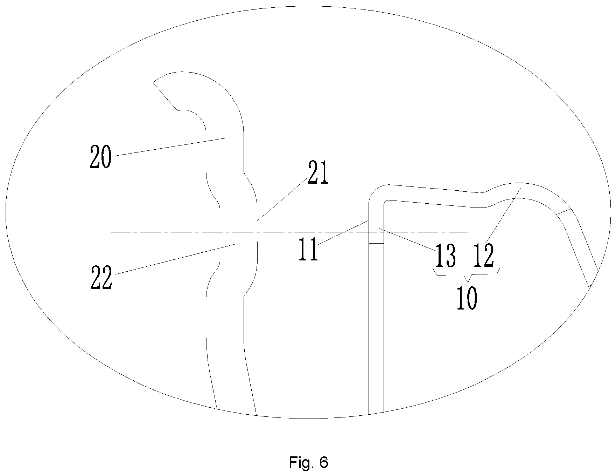

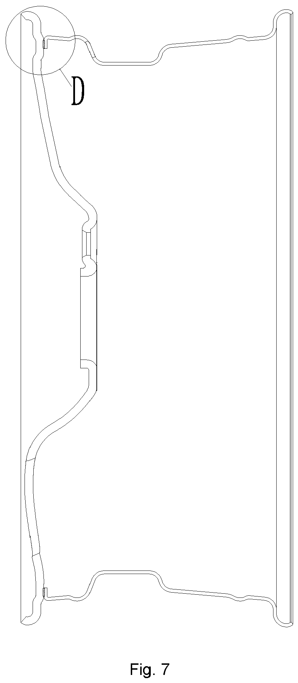

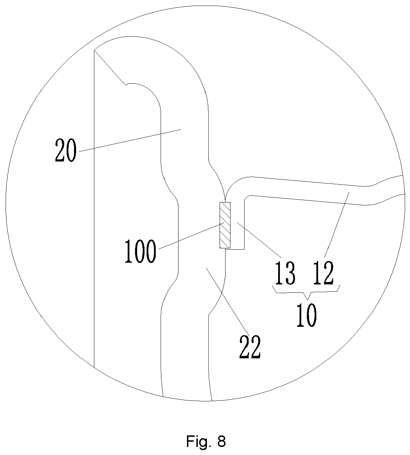

As shown in fig. 5 to fig. 8, this embodiment differs from Embodiment I in that a part of the spoke 20 protrudes towards the rim 10, so as to form an annular protrusion 22, and the bending flange 13 is adaptively fitted with the annular protrusion 22. In this way, the reliability of surface-fitting between the rim 10 and the spoke 20 is ensured, and the annular protrusion 22 and the bending flange 13 can also play a fool-proof mounting role when assembling the rim 10 and the spoke 20, effectively ensuring that shaft axes of the rim 10 and the spoke 20 are collinear and ensuring that the wheel forms a rotary body.

More importantly, a part of the spoke 20 is provided to protrude towards the rim 10, which effectively increases the gap at a connection contact position between opposite end faces of the spoke 20 and the rim 10, so as to provide sufficient operation space for the laser welding operation of the rim and the spoke, thereby ensuring that an operator performs stable and reliable laser welding on the rim and the spoke.

Certainly, in an alternative embodiment not shown in figures of some embodiments of the present invention, similarly, while ensuring stable connection of surface-fitting between the rim 10 and the spoke 20, a fool-proof mounting effect can also be achieved when assembling the rim 10 and the spoke 20, the aesthetic appearance design of the wheel is also improved; and a part of the spoke 20 is provided to protrude towards the rim 10, so as to form a plurality of protrusion structures, and the plurality of bending flanges 13 are adaptively fitted with the plurality of protrusion structures in one to one correspondence.

It should be noted that the terms used herein are for the purpose of describing particular embodiments only and are not intended to limit exemplary embodiments in accordance with the present invention. As used herein, the singular form is intended to comprise the plural form as well, unless the context clearly indicates otherwise, and further it should be understood that the terms "includes" and/or "including" when used in the present description, specify the presence of features, steps, operations, devices, components and/or combinations thereof.

Unless specifically stated otherwise, the relative arrangement of components and steps, numerical expressions and numerical values set forth in these embodiments do not limit the scope of the present invention. Moreover, it should be understood that for the convenience of description, the dimensions of the parts shown in the drawings are not drawn according to the actual proportional relationship. Techniques, methods and devices known to a person of ordinary skill in the relevant art may not be discussed in detail, but the techniques, methods and devices shall be considered as a part of the description to be granted, where appropriate. In all examples shown and discussed herein, any specific values shall be construed as exemplary only and not as limiting. Therefore, other examples of the exemplary embodiments may have different values. It should be noted that similar numerals and letters represent similar items in the following figures, and thus once an item is defined in a figure, it need not be further discussed in subsequent figures.

For ease of description, spatially relative terms may be used herein, such as "on ...", "above ...", "on an upper surface of ..." and "upper", etc., to describe spatial positional relationships of one device or feature with respect to other devices or features as illustrated in the figures. It will be understood that the spatially relative terms are intended to comprise different orientations in use or operation in addition to the orientation of the device described in the figures. For example, if the devices in the figures are inverted, devices described as "above other devices or configurations" or "on other devices or configurations" would then be oriented "below other devices or configurations" or "under other devices or configurations". Accordingly, the exemplary term "over ..." can comprise both orientations of "over..." and "below ...". The device may be positioned in various other ways as well (rotating 90 degrees or at other orientations), and the spatially relative descriptions used herein are to be construed accordingly.

It should be noted that the terms used herein are for the purpose of describing particular embodiments only and are not intended to limit exemplary embodiments in accordance with the present invention. As used herein, the singular form is intended to comprise the plural form as well, unless the context clearly indicates otherwise, and further it should be understood that the terms "includes" and/or "comprising" when used in the present description, specify the presence of features, steps, operations, devices, components and/or combinations thereof.

It should be noted that the terms "first", "second" etc. in the description, claims, and accompanying drawings of some embodiments of the present invention are used to distinguish similar objects, and are not necessarily used to describe a specific sequence or order. It should be understood that the data so used may be interchanged where appropriate so that the embodiments of the present invention described herein can be implemented in sequences other than those illustrated or described herein.

The foregoing description is merely exemplary embodiments of the present invention and is not intended to limit the present invention. For a person skilled in the art, the present invention may have various modifications and variations. Any modifications, equivalent replacements, improvements, etc. made within the spirit and principle of the present invention shall belong to the scope of protection of the present invention.

## Claims

1. A wheel, comprising:
a rim (10), a surface of an axial end of the rim (10) forming a first connecting surface (11); and
a spoke (20), a part of a surface of an axial end of the spoke (20) forming a second connecting surface (21), wherein the spoke (20) is laser welded with the first connecting surface (11) by the second connecting surface (21), a welding bead structure (100) for fixedly connecting the rim (10) and the spoke (20) is formed at a contact position between the first connecting surface (11) and the second connecting surface (21), and the welding bead structure (100) is formed by a part of the rim (10) and a part of the spoke (20) being melted and then connected.

2. The wheel according to claim 1, wherein the rim (10) comprises a rim body (12) and a folding flange (13) which are connected to each other, wherein an end face of the bending flange (13) facing towards a side of the spoke (20) forms the first connecting surface (11), the first connecting surface (11) is surface-fitted with the second connecting surface (21), and the welding bead structure (100) is located in a region covered by the first connecting surface (11) and the second connecting surface (21).

3. The wheel according to claim 1, wherein the rim (10) comprises a rim body (12) and a folding flange (13) which are connected to each other, wherein an end face of the bending flange (13) facing towards a side of the spoke (20) forms the first connecting surface (11), the first connecting surface (11) is surface-fitted with the second connecting surface (21), and a width of the welding bead structure (100) in a radial direction of the rim (10) is greater than or equal to a width of the first connecting surface (11) in the radial direction of the rim (10).

4. The wheel according to claim 2 or 3, wherein there is one bending flange (13), the bending flange (13) extends continuously around a circumferential direction of the rim body (12), and the second connecting surface (21) is in an annular shape adapted to the bending flange (13).

5. The wheel according to claim 4, wherein a part of the spoke (20) is provided to protrude towards the rim (10) so as to form an annular protrusion (22), and the bending flange (13) is adaptively fitted with the annular protrusion (22).

6. The wheel according to claim 2 or 3, wherein there are a plurality of bending flanges (13), the plurality of bending flanges (13) are arranged at intervals around a circumferential direction of the rim body (12), the second connecting surface (21) comprises a plurality of segments of sub-connecting surfaces arranged at intervals around a circumferential direction of the spoke (20), and the plurality of bending flanges (13) cooperate with the plurality of segments of sub-connecting surfaces in one to one correspondence.

7. The wheel according to claim 6, wherein a part of the spoke (20) is provided to protrude towards the rim (10), so as to form a plurality of protrusion structures, and the plurality of bending flanges (13) are adaptively fitted with the plurality of protrusion structures in one to one correspondence.

8. The wheel according to claim 2 or 3, wherein an extension path of the welding bead structure (100) is the same as a circumferential extension path of the bending flange (13), and a length of the welding bead structure (100) is equal to a length of the bending flange (13).

9. The wheel according to claim 2 or 3, wherein the bending flange (13) is perpendicular to the rim body (12).

10. The wheel according to claim 3, wherein the first connecting surface (11) and the second connecting surface (21) are both planar surfaces.
1. A wheel, comprising:
a rim (10), a surface of an axial end of the rim (10) forming a first connecting surface (11); and
a spoke (20), a part of a surface of an axial end of the spoke (20) forming a second connecting surface (21), wherein the spoke (20) is laser welded with the first connecting surface (11) by the second connecting surface (21), a welding bead structure (100) for fixedly connecting the rim (10) and the spoke (20) is formed at a contact position between the first connecting surface (11) and the second connecting surface (21), and the welding bead structure (100) is formed by a part of the rim (10) and a part of the spoke (20) being melted and then connected; wherein the rim (10) comprises a rim body (12) and a bending flange (13) which are connected to each other, a part of the spoke (20) is provided to protrude towards the rim (10) so as to form an annular protrusion (22), and the bending flange (13) is adaptively fitted with the annular protrusion.
2. The wheel according to claim 1, wherein the rim (10) comprises a rim body (12) and a bending flange (13) which are connected to each other, wherein an end face of the bending flange (13) facing towards a side of the spoke (20) forms the first connecting surface (11), the first connecting surface (11) is surface-fitted with the second connecting surface (21), and the welding bead structure (100) is located in a region covered by the first connecting surface (11) and the second connecting surface (21).
3. The wheel according to claim 1, wherein the rim (10) comprises a rim body (12) and a bending flange (13) which are connected to each other, wherein an end face of the bending flange (13) facing towards a side of the spoke (20) forms the first connecting surface (11), the first connecting surface (11) is surface-fitted with the second connecting surface (21), and a width of the welding bead structure (100) in a radial direction of the rim (10) is greater than or equal to a width of the first connecting surface (11) in the radial direction of the rim (10).
4. The wheel according to claim 2 or 3, wherein there is one bending flange (13), the bending flange (13) extends continuously around a circumferential direction of the rim body (12), and the second connecting surface (21) is in an annular shape adapted to the bending flange (13).
5. The wheel according to claim 2 or 3, wherein there are a plurality of bending flanges (13), the plurality of bending flanges (13) are arranged at intervals around a circumferential direction of the rim body (12), the second connecting surface (21) comprises a plurality of segments of sub-connecting surfaces arranged at intervals around a circumferential direction of the spoke (20), and the plurality of bending flanges (13) cooperate with the plurality of segments of sub-connecting surfaces in one to one correspondence.
6. The wheel according to claim 5, wherein a part of the spoke (20) is provided to protrude towards the rim (10), so as to form a plurality of protrusion structures, and the plurality of bending flanges (13) are adaptively fitted with the plurality of protrusion structures in one to one correspondence.
7. The wheel according to claim 2 or 3, wherein an extension path of the welding bead structure (100) is the same as a circumferential extension path of the bending flange (13), and a length of the welding bead structure (100) is equal to a length of the bending flange (13).
8. The wheel according to claim 2 or 3, wherein the bending flange (13) is perpendicular to the rim body (12).
9. The wheel according to claim 3, wherein the first connecting surface (11) and the second connecting surface (21) are both planar surfaces.
